# EUROPÄISCHE PATENTSCHRIFT

(11) **EP 1 582 424 B1**
(45) Veröffentlichungstag und Bekanntmachung des Hinweises auf die Patenterteilung: **30.08.2006**
(21) Anmeldenummer: 05004608.5
(22) Anmeldetag: 03.03.2005
(51) Int. Cl.: B60R 21/34

(54) **Vorrichtung zum Aufstellen der Fronthaube eines Kraftfahrzeuges zumindest im frontseitigen Haubenschlossbereich**
Apparatus for upward movement of at least the frontal lock area of a vehicle hood
Dispositif pour mouvement ascendant d'au moins une zone frontale du capot où se trouve la serrure

(30) Priorität: 31.03.2004 DE 102004015579
(43) Veröffentlichungstag der Anmeldung: 05.10.2005
(73) Patentinhaber: ISE Innomotive Systems Europe GmbH, 51702 Bergneustadt (DE)
(72) Erfinder: Lang, Josef, 1131 Budapest (HU)
(74) Vertreter: Fuchs Mehler Weiss & Fritzsche

(56) Entgegenhaltungen:
- DE-A1- 10 111 096
- DE-C1- 19 925 520
- US-B1- 6 293 362

## Beschreibung

Die Erfindung bezieht sich auf eine Vorrichtung zum Schutz von Personen bei einem Frontalaufprall auf ein Kraftfahrzeug durch aktives Aufstellen dessen Fronthaube zumindest im frontseitigen Haubenschlossbereich, bestehend aus einem Aufstellelement mit einem karosseriefesten Gehäuse und einem darin linear geführten, mit dem Haubenschloß verbundenen Hubelement, das sensorgesteuert mittels eines Federspeichers um einen vorgegebenen Hub unter Aufstellung der Fronthaube ausfahrbar ist, und das eine Einrichtung zum Reversieren des aufgestellten Hubelementes aufweist.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz nach dem Prinzip der aktiven Fronthaube, deren windschutzscheibenseitige Schamieranordnung über einen schwenkbar oder verschiebbar gelagerten Schamierträger so an der Karosserie des Vorderwagens befestigt ist, dass im Falle einer Kollision des Fahrzeuges mit einer Person die Fronthaube samt der Schamieranordnung mittels einer an dem Scharnierträger angreifenden energiespeichemder Einrichtung, z. B. einem Feder-Kraftspeicher, nach oben verschwenkt bzw. verschoben, d. h. angehoben werden kann.

Neben diesen Lösungen zur aktiven Fronthaube mit windschutzscheibenseitiger Anhebung der Fronthaube über den Scharnierdrehanschlag, bei denen das vordere Haubenschloss im geschlossenen Zustand verbleibt, wodurch der Frontbereich der Fronthaube relativ steif und hart ist, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich), sind gemäß der DE 197 21 565 A1 und DE 101 08 880 A1 auch Konstruktionen für das sensorgesteuerte Aufstellen der Fronthaube im vorderen, d.h. frontseitigen HaubenSchlossbereich bekannt geworden. Das Aufstellen kann dabei unter Entriegelung des Haubenschlosses als auch unter Aufstellen der Fronthaube samt geschlossenem Haubenschloß erfolgen.

Die letztgenannte Schrift offenbart dabei auch den Gedanken, im Falle eines drohenden Unfalles die Fronthaube sowohl im Schamierbereich als auch im Haubenschlossbereich aufzustellen.

Zum aktiven Aufstellen der Fronthaube dienen Aufstellelemente, die ein karosseriefest angebrachtes Unterteil und ein darin aufstellbar geführtes Hubelement in Verbindung mit einem Energiespeicher besitzen, der durch einen sensorgesteuerten Aktuator im Fall eines drohenden Unfalles auslösbar, ist und dabei das Hubelement mit der Fronthaube um einen vorgegebenen Arbeitshub aufstellt. Der Stand der Technik und Gegenstände von zahlreichen, noch nicht veröffentlichten älteren Anmeldungen der Patentanmelderin, zeigen eine Reihe von Konstruktionen für diese Aufstellelemente, die typischerweise als Energiespeicher einen Federspeicher in Form einer vorspannbaren Schraubenfeder-Anordnung besitzen.

Da es vorkommen kann, daß die Aufstellelemente ausgelöst werden, ohne daß es zu einem Aufprall einer Person kommt, sei es durch eine ungewollte Auslösung oder ein leichtes Anstoßen beim Parkieren an Gegenstände, z.B. Mülltonnen, und um dann nicht, wenn auch mit nur leicht aufgestellter Fronthaube (ca. 55 mm), weiterfahren zu müssen, muß es möglich sein, das Aufstellelement vor Ort zu reversieren, d.h. in den Grundzustand mit vorgespannter Federanordnung zu bringen.

Man könnte zunächst daran denken, dieses Reversieren manuell, insbesondere durch einen Fahrzeuginsassen, durchzuführen. Die hierbei direkt manuell ausübbaren Rückstellkräfte reichen jedoch nicht aus, um das aufgestellte Hubelement gegen die starke Federkraft der Schraubenfederanordnung des Federspeichers direkt in den Ausgangszustand zurückzudrücken oder zurückzuziehen. Es ist daher bekannt und auch vorgeschlagen worden, spezielle Hilfswerkzeuge für das Reversieren im PKW mitzuführen. Um diese gesonderten Hilfswerkzeuge zu vermeiden, ist es gemäß der DE 101 11 096 A1 auch bekannt, die Fronthaube in Verbindung mit einer auf Zug beanspruchten Gasdruckfeder als Hebelarm für das Reversieren der im Schamierbereich aufgestellten Fronthaube zu benutzen. Das Reversieren des Aufstellelementes für die Aufstellung der Fronthaube im Haubenschlossbereich ohne Bord-Hilfswerkzeuge ist allerdings noch in keiner Druckschrift offenbart.

Der Erfindung liegt die Aufgabe zugrunde, die eingangs bezeichnete Vorrichtung so auszubilden, daß mit einfachen Mitteln ohne gesondert an Bord mitgeführte Hilfswerkzeuge eine manuelle oder motorische Reversierung des aufgestellten Hubelementes von Aufstellelementen im Haubenschlossbereich möglich ist.

Die Lösung dieser Aufgabe gelingt bei einer Vorrichtung zum Schutz von Personen bei einem Frontalaufprall auf ein Kraftfahrzeug durch aktives Aufstellen dessen Fronthaube zumindest im frontseitigen Haubenschlossbereich, bestehend aus einem Aufstellelement mit einem karosseriefesten Gehäuse und einem darin linear geführten, mit dem Haubenschloß verbundenen Hubelement, das sensorgesteuert mittels eines Federspeichers um einen vorgegebenen Hub unter Aufstellung der Fronthaube ausfahrbar ist, und das eine Einrichtung zum Reversieren des aufgestellten Hubelementes aufweist gemäß der Erfindung dadurch, daß die Reversiereinrichtung eine Reversierklinke aufweist, die drehbeweglich an einem manuell oder elektromotorisch antreibbaren Triebelement angelenkt ist, die zusammen mit dem Triebelement parallel zum Hubelement linear geführt im Gehäuse aufgenommen ist und die Steuerkonturen für eine abhängig von der Position der Aufstellung des Hubelementes selbsttätige Ver- und Entklinkung mit einem Rückzugelement am Hubelement besitzt.

Mit der fahrzeugfest im Aufstellelement angebrachten Reversiereinrichtung ist eine einfache kostengünstige Reversiermöglichkeit, sei es manuell oder motorisch ohne gesonderte Hilfswerkzeuge an Bord des Fahrzeuges gegeben. Da die Reversiereinrichtung betriebszustandshängig, insbesondere im Grundzustand, vom Hubelement abkoppelbar ist, beeinträchtigt die Reversiereinrichtung die schnelle Aufstellung des Hubelementes im Gefahrenfall nicht.

Weiterbildungen und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen der Reversiereinrichtung wird die Erfindung näher erläutert.

Es zeigen:
- Fig. 1: in einer isometrischen Darstellung mit weggebrochener Gehäuse-Frontwand ein Aufsieüeiement zum Aufstellen der Fronthaube eines PKW im Haubenschloßbereich im Grundzustand mit einer ersten, hydraulisch betätigbaren Ausführungsform der erfindungsgemäßen Reversiereinrichtung mittels einer gesteuerten Reversierklinke,
- Fig. 2: einer Längsschnitt-Darstellung den inneren Aufbau des Aufstellelementes nach Fig. 1,
- Fig.3: in sieben Figurenteilen A - G die positionsabhängig gesteuerte Wirkverbindung zwischen Reversierklinke und dem Hubelement des Aufstellelementes,
- Fig. 4: in einer weiteren isometrischen Darstellung des Aufstellelementes nach Fig. 1 eine zweite Ausführungsform der erfindungsgemäßen Reversiereinrichtung mit einer gesteuerten Reversierklinke, die über einen Bowdenzug betätigbar ist,
- Fig. 5: eine Längsschnitt-Darstellung des Aufstellelementes mit Reversiereinrichtung nach Fig. 4,
- Fig. 6: in einer Längsschnitt-Darstellung ein Aufstellelement entsprechend den Figuren 1 und 4 mit einer dritten Ausführungsform der erfindungsgemäßen Reversiereinrichtung mit gesteuerter Reversierklinke, die mittels eines elektromotorisch angetriebenen Spindel-/Mutter-Antriebes linear bewegbar ist, und
- Fig. 7: in einer Übersichts-Darstellung den Vorderwagen eines PKW mit aufgestellter Fronthaube im Haubenschlossbereich durch ein Aufstellelement.

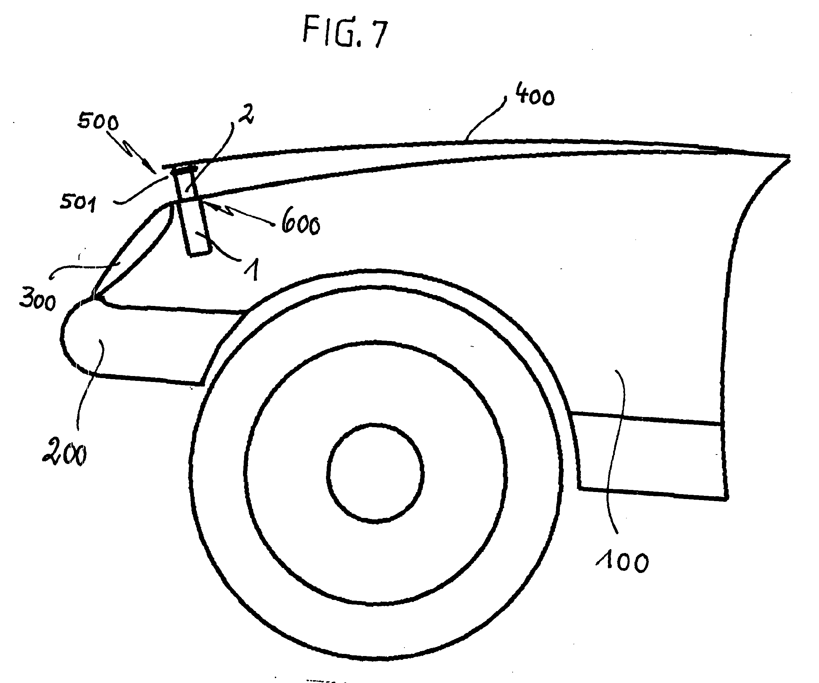

Die Fig. 7 zeigt in einer schematischen Übersichts-Darstellung den Vorderwagen eines Personenkraftfahrzeuges mit der zugehörigen Karosse 100, einem Stoßfänger 200 sowie einem Scheinwerfer 300. Abgedeckt wird der Vorderwagen durch eine Fronthaube 400, typischerweise die Motorhaube, die windschutzscheibenseitig über Scharniere angelenkt ist (nicht dargestellt) und frontseitig über ein Haubenschloß 500 mit der Karosse 100 des Vorderwagens verbunden ist. Das Haubenschloß 500 besteht typischerweise aus einem karosseriefesten Schlossteil 501 und einem mit diesem lösbar verriegelbaren, fest mit der Fronthaube verbundenen Schließteil (nicht dargestellt).

An der Frontseite des Vorderwagens ist (mindestens) ein Aufstellelement 600 zum aktiven Aufstellen der Fronthaube 400 im frontseitigen Haubenschloßbereich bei einem drohenden Frontalaufprall einer Person angebracht. Dieses Aufstellelement 600 besteht aus einem karosseriefest angebrachten Gehäuse 1 und einem darin linear geführten, mit den Schlossteil 501 des Haubenschlosses verbundenen Hubelement 2, das sensorgesteuert mittels eines Federspeichers um einen vorgegebenen Hub unter Aufstellung der Fronthaube ausfahrbar ist. Dieser aufgestellte Zustand ist in der Übersichtsfigur dargestellt. Die nachgebend aufgestellte Fronthaube 400 mildert einen Aufprall einer Person maßgebend.

Zusätzlich zu dem frontseitigen Haubenschloß-Aufsteller können auch Aufsteller für die hinteren Scharniere in an sich bekannter Weise vorgesehen sein.

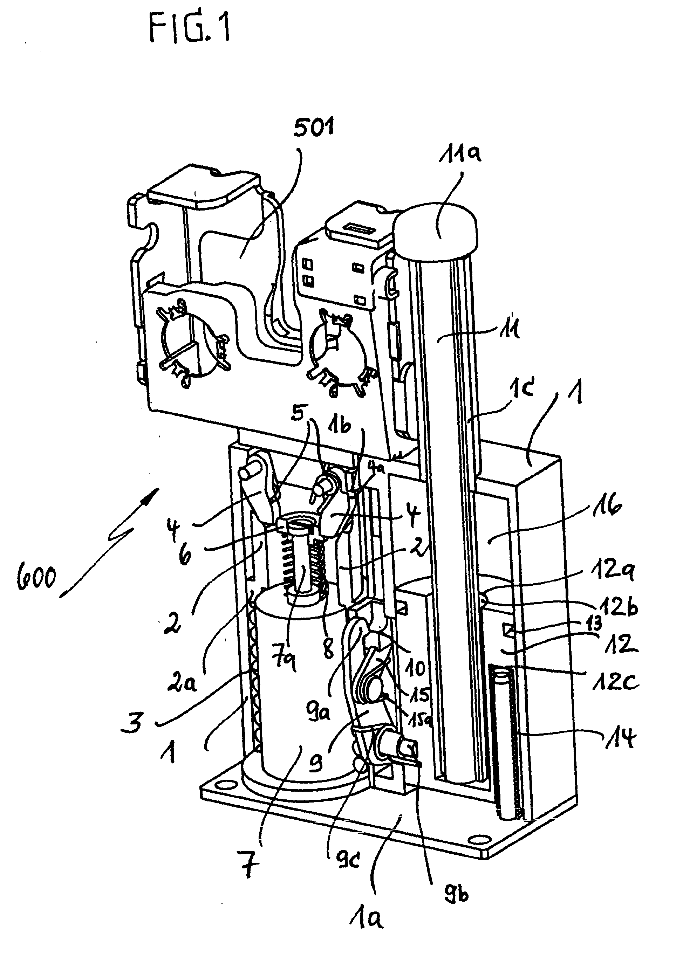

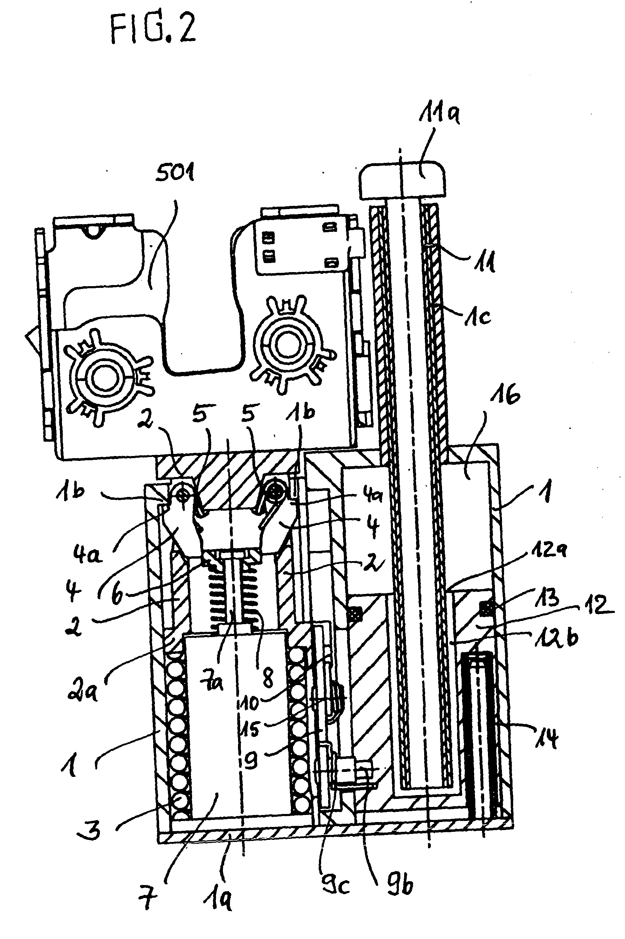

In den Figuren 1 bis 6 sind Ausgestaltungen des Aufstellelementes 600 in Verbindung mit verschiedenen Varianten von erfindungsgemäßen Einrichtungen zum Reversieren des aufgestellten Hubelementes dargestellt.
Die Figuren 1 - 3 zeigen in verschiedenen Darstellungen eine erste Ausführungsform einer Reversiereinrichtung für eine manuelle hydraulisch unterstützte Reversierung des aufgestellten Hubelementes 2 eines Aufstellelementes 600 für das Haubenschloß.

Dieses Aufstellelement 600 ist mit seinem Gehäuse 1 in geeigneter Weise, wie in Fig. 7 dargestellt, an der Karosserie 100 des Vorderwagens befestigt.

Auf dem Hubelement 2, das hohlzylindrisch ausgebildet ist, ist das karosseriefeste Schließteil 501 des Haubenschlosses angebracht.

Zum Aufstellen des Hubelementes 2 dient ein Federspeicher in Form einer Schraubenfeder 3, die sich mit ihrem unteren Ende am Gehäuseboden 1 a und mit ihrem oberen Ende an einem umlaufenden Bund 2 a des Hubelementes 2 abstützt, der auch zur Führung des Hubelementes dient. Im dargestellten Grundzustand ist die Schraubenfeder 3 vorgespannt, wobei eine lösbare Haltevorrichtung das Hubelement 2 gegen die Vorspannkraft der Schraubenfeder 3 niederhält. Die lösbare Haltevorrichtung weist mindestens zwei gegenüberliegende, in Aussparungen des Hubelementes 2 angelenkte Rastklinken 4 auf. Sie weisen jeweils eine Schulter 4 a auf, mit der sie sich an einem gehäusefesten Anschlag 1 b abstützen. Durch diese Verklinkung wird das Hubelement 2 daran gehindert aufgrund der Vorspannkraft der Schraubenfeder 3 auszufahren.

Die Rastklinken 4 stehen jeweils unter der Vorspannkraft einer Schenkelfeder 5 die versucht, die jeweilige Rastklinke unter Aufhebung der Verklinkung zum Zentrum des hohlzylindrischen Hubelementes hin zu verschwenken. Dieses Verschwenken wird im dargestellten Grundzustand durch ein Sperrglied 6 verhindert, das mit einem Auslösestift 7 a eines sensorgesteuerten Aktuators 7 verbunden ist. Wenn der Aktuator, der z.B. durch einen Auslösemagnet gebildet werden kann, im Fall eines drohenden Unfalles aktiviert wird, wird der Auslösestift 7 a mit dem Sperrglied 6 gegen die Kraft einer Rückstellfeder 8 eingezogen.

Dadurch können die Schenkelfedern 5 die Rastklinken 4 außer Wirkeingriff mit den gehäusefesten Anschlägen 1 b drehen und das kolbenartige Hubelement 2 kann, linear im Gehäuse 1 geführt, unter Aufstellen des Haubenschlosses ausfahren.

Das dargestellte Aufstellelement ist nur als zweckmäßiges Ausführungsbeispiel zu verstehen. Es kann auch eine andere Konstruktion haben, einschließlich der Ausbildung der lösbaren Halte-Vorrichtung. Derartige Aufstellelemente werden beispielsweise auch in älteren deutschen Patentanmeldungen der Anmelderin beschrieben.

Zum Reversieren des aufgestellten Hubelementes ist im ersten Ausführungsbeispiel nach den Figuren 1 bis 3 ein manuell, ggf. unter Zuhilfenahme der Fronthaube betätigbares hydraulisches System vorgesehen, das die Handkraft verstärkend übersetzt.

Dieses hydraulische System ist in einer zweiten Kammer des Gehäuses 1 neben der lösbaren Haltevorrichtung und dem Hubkolben untergebracht und steht über eine Reversierklinke 9 mit Steuerkonturen in gesteuerter Wirkverbindung mit dem Hubkolben.

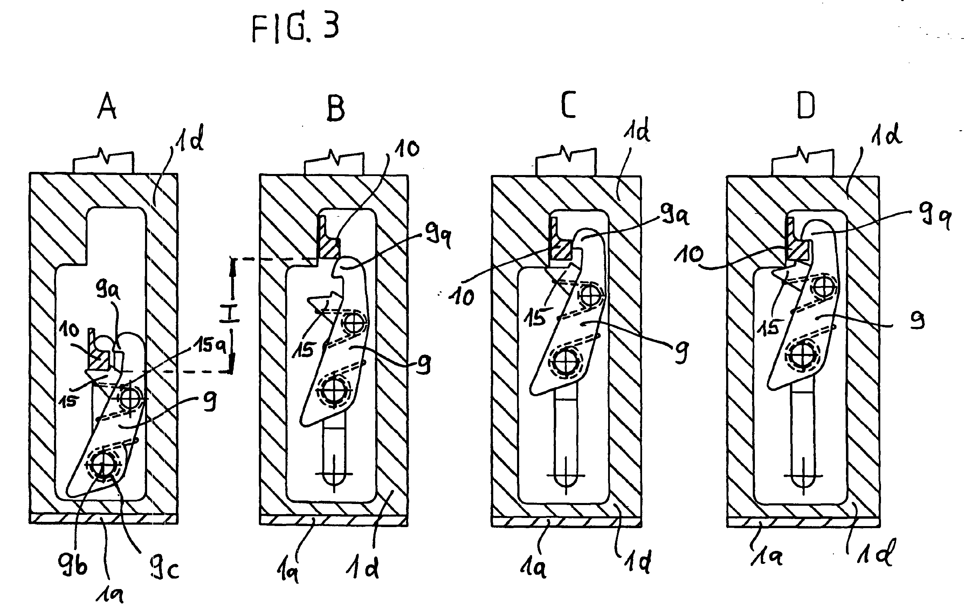

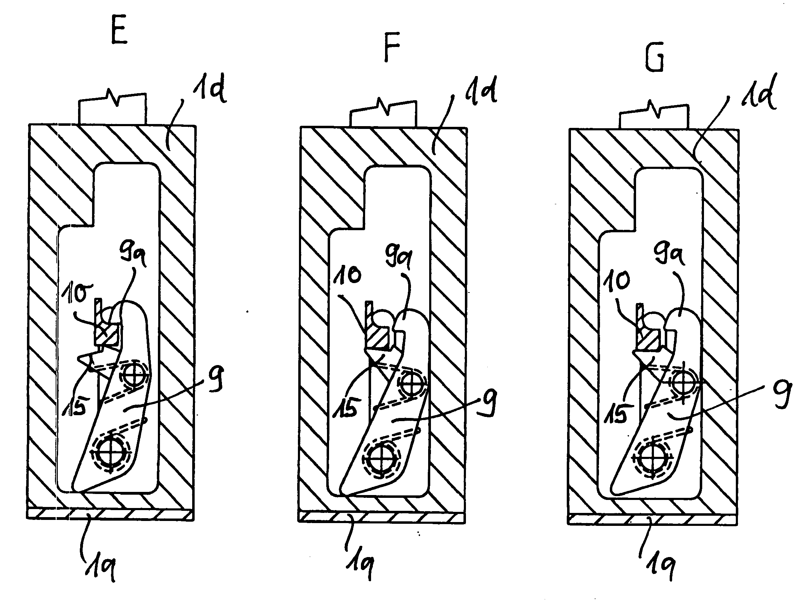

Diese mittels der Reversierklinke gesteuerte Wirkverbindung erfolgt durch einen Rückzughaken 10 am Hubelement 2, der sich positionsabhängig in eine Klinkennase 9 a der Reversierklinke einklinkt, wie im einzelnen noch anhand der Fig. 3 erläutert wird. Kurz vorab gesagt, im Grundzustand ist die Reversierklinke 9 ausgeklinkt, damit das Hubelement unbeeinträchtigt von der Reversiereinrichtung aufgestellt werden kann. Nach dem Hochfahren der Reversierklinke 9 (durch die Haubenaufstellung) klinkt sich die Klinkennase 9 a in den Rückzughaken 10 ein, wodurch das zu beschreibende hydraulische System das Hubelement 2 unter Spannen der Haltevorrichtung in seine Ausgangslage transportieren kann, in welcher die Einklinkung dann automatisch wieder aufgehoben wird.

Das hydraulische System besteht aus einem Arbeitskolben 11, der vorzugsweise als Teleskopkolben ausgebildet ist, und der dichtend in einem Gehäusestutzen 1 c linear geführt ist und ein Betätigungs-Kopfteil 11 a in Form eines Gummipuffers aufweist, und einem in der zugehörigen Gehäusekammer geführten Reversierkolben 12, der eine zentrische Bohrung 12 a zur Aufnahme des unteren Endes des Arbeitskolbens 11 mit einem vorgegebenen Ringspalt 12 b aufweist. Der Reversierkolben 12 ist dabei mittels einer umlaufenden Dichtung 13 gegenüber der oberen Kammerwandung abgedichtet. Er besitzt ferner eine Bohrung 12 c, in der eine Kolbenaufstellfeder 14 untergebracht ist, die sich mit ihrem unteren Ende am Gehäuseboden 1 a abstützt. Am Reversierkolben 12 ist ferner die Reversierklinke 9 über einen Bolzen 9 b, vorgespannt durch eine Schenkelfeder 9 c, drehbar angelenkt. Auf dieser Reversierklinke 9 ist eine Abstützklinke 15, vorgespannt durch eine weitere Schenkelfeder 15 a, drehbar angelenkt.

Im Raum zwischen der Oberseite des Reversierkolbens 12 und der kopfseitigen Kammerwand befindet sich Hydrauliköl 16.

Das hydraulische System arbeitet wie folgt:

Das Kopfteil 11 a liegt in der Grundstellung an der Unterseite der Fronthaube an. Wenn nach einer erfolgten Aufstellung des Hubelementes 2 die Fronthaube weiter geöffnet wird, kann die Kolbenaufstellfeder 14 den Reversierkolben 12 nach oben drücken. Dabei wird das Hydrauliköl 16 verdrängt, das über den Ringspalt 12 b in die zentrische Bohrung 12 a unter den Arbeitskolben 11 strömt und diesen dabei aufstellt. Zum Reversieren des Hubelementes wird der Arbeitskolben 11 direkt von Hand oder indirekt über die zu schließende Fronthaube eingedrückt. Das hierbei über den Ringspalt 12 b zurück verdrängte Hydrauliköl beaufschlagt die Oberseite des Reversierkolbens 12 und drückt diesen nach unten. Da in dieser Position, wie noch gezeigt wird, die Klinkennase 9 a der Reversierklinke 9 am Rückzughaken 10 eingeklinkt ist, nimmt dadurch die an dem Reversierkolben 12 angelenkte Reversierklinke 9 das Hubelement 2 mit nach unten bis in den Grundzustand. Durch die unterschiedlich großen Flächen des Arbeitskolbens 11 und des Reversierkolbens 12, kann der manuell aufgebrachte Druck im Hydraulik-System ohne weiteres die Aufstellfeder 3 des Aufstellelementes spannen.

Anhand der Fig. 3 wird in sieben Figurenteilen A bis G die positionsabhängige Wirkverbindung zwischen Reversierklinke 9 und dem Rückzug- oder Schlepphaken 10 erläutert. Die Reversierklinke ist innerhalb eines Ausschnittes einer inneren Gehäusewandung 1 d angeordnet und weist Steuerkonturen auf, die mit der Gehäusewandung abhängig von der Position des Hubelementes, d.h. des Rückzughakens 10 und dem Reversierkolben 12, an dem die Reversierklinke 9 über den Bolzen 9 b drehbeweglich angelenkt ist, in steuernde Wirkverbindung treten. Die Schenkelfeder 9 c spannt dabei die Reversierklinke 9 gegen den Uhrzeigersinn, d.h. im verklinkenden Sinne vor, wogegen die Schenkelfeder 15 a die Abstützklinke 15 im Uhrzeigersinn vorspannt.

In der Grundstellung (Figurenteil A) verhindert die Stützklinke 15, die am unteren Bund des Rückzughakens anliegt, in Verbindung mit dem am Gehäuseboden 1 a anliegenden Ende der Reversierklinke 9, daß die Reversierklinke 9 mit ihrer Klinkennase 9 a am Rückzughaken einrastet.
Wird das Hubelement 2 ausgelöst, stellt es sich um den Hub "I" auf und auch der Rückzughaken 10 erreicht seine obere Position Da gleichzeitig die Fronthaube um diesen Hub aufgestellt ist, kann sich auch der Reversierkolben 12 unter der Wirkung der Kolbenaufstellfeder14 und damit auch die Reversierklinke 9 um diesen Hub aufstellen. Die Schenkelfeder 9 c dreht dabei die Reversierklinke etwas nach innen (Figurenteil B).

Nach dem Öffnen der aufgestellten Fronthaube schiebt die Kolbenfeder 14 den Reversierkolben 12 und damit auch die Reversierklinke 9 weiter nach oben, die mit ihrer Klinkennase 9 a an dem Rückzughaken 10 vorbeifährt. Dabei stützt sich die Abstützklinke 15 an der einen Ecke des Gehäuses 1 d ab und verdreht sich gegen die Vorspannung der Schenkelfeder 15 a, wodurch die Reversierklinke 9 weiterfahren kann. Alternativ könnte sich die Abstützklinke auch an dem Rückzughaken 10 abstützen und dabei verdrehen (Figurenteil C).

Am Ende der Aufstellbewegung des Reversierkolbens 12 und damit der Reversierklinke 9 in die oberste Position durch die Kolbenaufstellfeder 14 rastet die Klinkennase 9 a der Reversierklinke 9 am Rückzughaken 10 ein; damit ist die Reversiereinheit bereit für den Reversiervorgang (Figurenteil D).

Zum Reversieren wird, wie bereits erwähnt, der Arbeitskolben 11 nach unten gedrückt, direkt manuell oder mittels der Fronthaube. Mit ihm fährt auch der Reversierkolben 12 sowie die mit ihm verbundene Reversierklinke 9 nach unten, die über den eingeklinkten Rückzughaken 10 auch das Hubelement 2 unter Spannen der Halte-Vorrichtung mit nach unten zieht, bis der untere Hebelarm der Reversierklinke 9 an den Gehäuseboden 1 a anschlägt (Figurenteil E). Vor dem Berühren des Gehäusebodens rastet die Halte-Vorrichtung ein, d.h. wird erneut gehalten bzw. gespannt. Danach erfolgt ein kleiner Überhub bis zum Gehäuseboden.

Während dieses Überhubes von ca. 0,8 -1 mm wird die Reversierklinke 9 durch Hebelwirkung im Uhrzeigersinn verschwenkt. Dabei öffnet sich die Verklinkung und gibt den Rückzughaken 10 frei. Durch das Verschwenken der Reversierklinke 9 wird auch die Abstützklinke 15 verschwenkt und kommt dabei zur Anlage an dem unteren Bund des Rückzughakens 10. Sie verhindert dadurch ein Einrasten der Klinkennase 9 a am Rückzughaken 10 (Figurenteil F). Dabei fährt das gespannte Aufstellsystem den Überhub selbsttätig zurück, wodurch das Gesamt-System in die Ausgangslage gelangt (Figurenteil G).

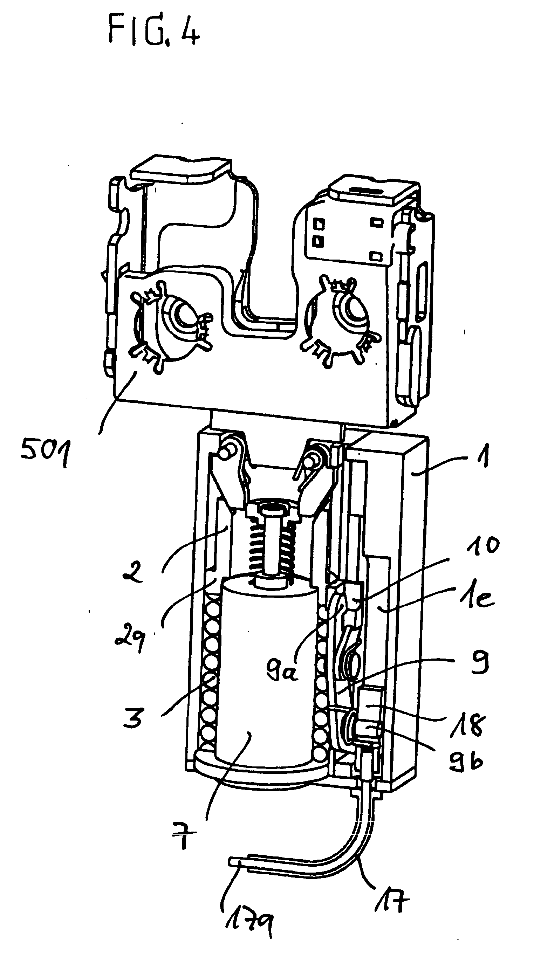

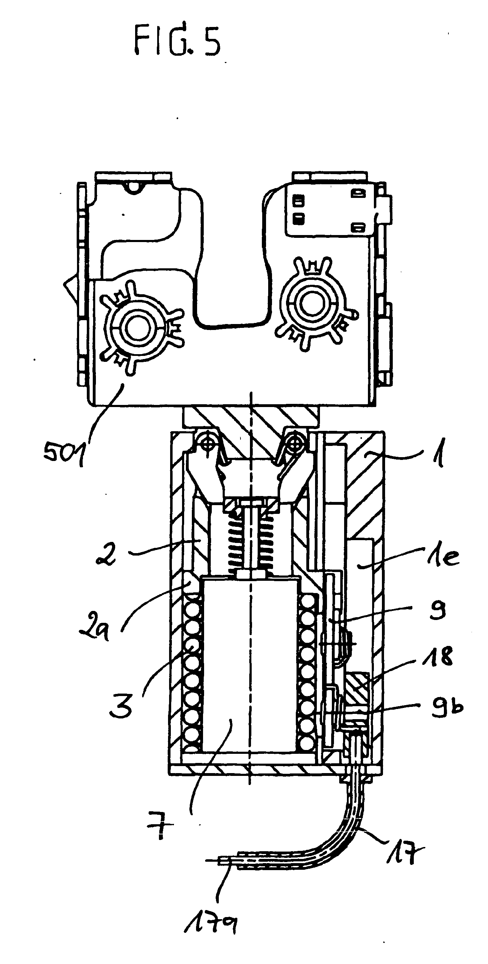

In den Figuren 4 und 5 ist ein zweites Ausführungsbeispiel der erfindungsgemäßen Reversiereinrichtung mit einer selbsttätig gesteuerten Reversierklinke dargestellt. Das zugehörige Aufstellelement, die sogenannte Aktorik, ist identisch zu demjenigen nach dem ersten Ausführungsbeispiel, so daß der besseren Übersicht halber nur einige wesentliche Komponenten der Aktorik mit Bezugszeichen versehen sind. Wie im ersten Ausführungsbeispiel kann die Aktorik auch in anderer Weise ausgebildet sein. Wesentlich ist das linear aufstellbare Hubelement mit dem aufgesetzten Haubenschloß.

Während bei der ersten Ausführungsform ein manuell betätigtes hydraulisches Reversiersystem vorgesehen ist, zeigen die Figuren 4 und 5 ein Reversiersystem mit einem Bowdenzug 17. Das Zugseil 17 a dieses Bowdenzuges ist mit einem Ende mittels eines üblichen Nippels oder dergleichen in einem Gleitstück 18 befestigt, das in einer Ausnehmung 1 e des Gehäuses 1 linear geführt aufgenommen ist. In diesem Gleitstück 18 ist die Reversierklinke 9 mittels des Bolzens 9 drehbar gelagert, analog der Bolzenlagerung im Reversierkolben im ersten Ausführungsbeispiel.

Das andere Ende des Zugseiles steht beispielsweise mit der Fronthaube oder der Tür des PKW derart in Wirkverbindung, daß diese Fahrzeugteile als Hebel für die manuelle Reversierung benutzt werden können. Dazu wird beim Öffnen der Fronthaube bzw. der Tür bei einem aufgestellten Hubelement das Zugseil 17 a des Bowdenzuges mit dem Gleitstück 18 und der Reversierklinke 9 analog den Figurenteilen der Fig. 3 nach oben geschoben, bis die Klinkennase 9 a am Rückzughaken 10 einhakt. Beim nachfolgenden Schließen der Fronthaube bzw. Tür zieht dann das Zugseil 17 a den Gleitschuh 18 mit eingehängter Reversierklinke 9 nach unten, unter Reversierung des aufgestellten Hubelementes 2 über den Rückzughaken 10. Nach dem erneuten Spannen des Aufstellelementes wird analog wie zur Fig. 3 beschrieben, die Reversierklinke 9 wieder selbsttätig vom Rückzughaken 10 entklinkt.

Das Zugseil 17 a kann dabei direkt an einer geeigneten Stelle der Fronthaube befestigt sein. Es kann aber auch mit einem im Vorderwagen angelenkten, im aufstellenden Sinne vorgespannten Reversierhebel verbunden sein, der bei geschlossener Fronthaube von dieser niedergedrückt wird und beim Öffnen der Fronthaube sich selbsttätig aufstellt und dabei über das Zugseil die Reversierklinke hochstellt, sofern das Hubelement aufgestellt ist.

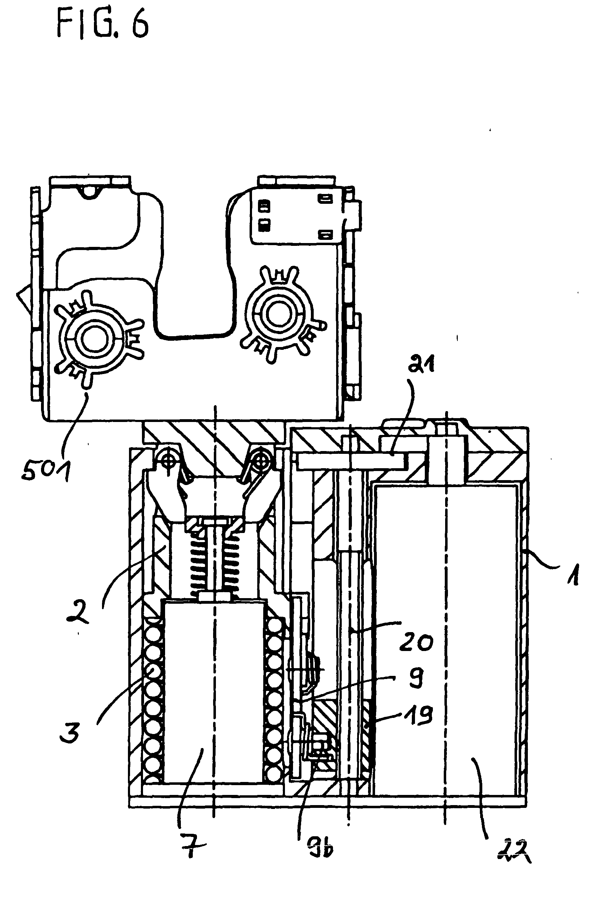

In der Figur 6 ist ein drittes Ausführungsbeispiel der erfindungsgemäßen Reversiereinrichtung mit einer selbsttätig gesteuerten Reversierklinke dargestellt. Das zugehörige Aufstellelement, die sogenannte Aktorik, ist ebenfalls identisch zu demjenigen nach dem ersten Ausführungsbeispiel, so daß der besseren Übersicht halber ebenfalls nur einige wesentliche Komponenten der Aktorik mit Bezugszeichen versehen sind. Wie im ersten Ausführungsbeispiel kann die Aktorik auch in anderer Weise ausgebildet sein. Wesentlich ist das linear aufstellbare Hubelement mit dem aufgesetzten Haubenschloß.

Das in Fig. 6 dargestellte Ausführungsbeispiel der Reversiereinheit weist eine elektromotorisch angetriebene Reversierklinke 9, die über den Bolzen 9 b in einer Reversiermutter 19 drehbar angelenkt ist, auf. Die Reversiermutter 19 steht in Gewinde-Wirkverbindung mit einer sich vertikal im Gehäuse 1 erstreckenden, drehbar gelagerten Gewindespindel 20, die kopfseitig über ein Übersetzungsgetriebe 21 mit einem im Gehäuse 1 untergebrachten Elektromotor 22 steht.

Nach einer Aufstellung des Hubelementes 2 fährt der Elektromotor 22 die Reversiermutter 19 mit der Reversierklinke 9 nach oben, bis letztere sich mit dem Rückzughaken 10 verklinkt. Nach Umsteuerung der Drehrichtung fährt dann der Elektromotor 22 die Reversiermutter 19 mit Reversierklinke 9 nach unten, unter Mitziehung des Hubelementes 2 bis zu dessen Spannen. Durch Fahren eines kleinen Überhubes wird dann, wie in den vorbeschriebenen Ausführungsbeispielen, das Hubelement wieder entklinkt, und steht damit für eine erneute Aufstellung bereit.

### Bezugszeichenliste

- 1: Gehäuse
- 1 a: Gehäuseboden
- 1 b: Anschlag
- 1 c: Gehäusestutzen
- 1 d: innere Gehäusewand
- 1 e: Ausnehmung
- 2: Hubelement
- 2 a: umlaufender Bund
- 3: Schraubenfeder
- 4: Rastklinken
- 4 a: Schulter
- 5: Schenkelfeder
- 6: Sperrglied
- 7: Aktuator
- 7 a: Auslösestift
- 8: Rückstellfeder
- 9: Reversierklinke
- 9 a: Klinkennase
- 9 b: Bolzen
- 9 c: Schenkelfeder
- 10: Rückzughaken
- 11: Arbeitskolben
- 11 a: Betätigungs-Kopfteil
- 12: Reversierkolben
- 12 a: Zentrische Bohrung
- 12 b: Ringspalt
- 12 c: Bohrung
- 13: Dichtung
- 14: Kolbenaufstellfeder
- 15: Abstützklinke
- 15 a: Schenkelfeder
- 16: Hydrauliköl
- 17: Bowdenzug
- 17 a: Zugseil
- 18: Gleitstück
- 19: Reversiermutter
- 20: Gewindespindel
- 21: Übersetzungsgetriebe
- 22: Elektromotor
- 100: Karosse
- 200: Stoßfänger
- 300: Scheinwerfer
- 400: Fronthaube
- 500: Haubenschloß
- 501: karosseriefestes Schließteil
- 600: Aufstellelement

## Patentansprüche

1. Vorrichtung zum Schutz von Personen bei einem Frontalaufprall auf ein Kraftfahrzeug durch aktives Aufstellen dessen Fronthaube (400) zumindest im frontseitigen Haubenschlossbereich, bestehend aus einem Aufstellelement (600) mit einem karosseriefesten Gehäuse (1) und einem darin linear geführten, mit dem Haubenschloß verbundenen Hubelement (2), das sensorgesteuert mittels eines Federspeichers (3) um einen vorgegebenen Hub unter Aufstellung der Fronthaube ausfahrbar ist, und das eine Einrichtung zum Reversieren des aufgestellten Hubelementes aufweist, **dadurch gekennzeichnet, daß** die Reversiereinrichtung eine Reversierklinke (9) aufweist, die drehbeweglich an einem manuell oder elektromotorisch antreibbaren Triebelement (12, 18, 19) angelenkt ist, die zusammen mit dem Triebelement parallel zum Hubelement (2) linear geführt im Gehäuse (1) aufgenommen ist und die Steuerkonturen für eine abhängig von der Position der Aufstellung des Hubelementes selbsttätige Ver- und Entklinkung mit einem Rückzugelement (10) am Hubelement (2) besitzt.

2. Vorrichtung nach Anspruch 1, **dadurch gekennzeichnet, daß** die Reversierklinke (9) eine Klinkennase (9 a) für einen verklinkenden Wirkeingriff für das als Rückzughaken (10) ausgebildete Rückzugelement am Hubelement (2) besitzt.

3. Vorrichtung nach Anspruch 1 oder 2, **dadurch gekennzeichnet, daß** die Reversierklinke (9) mittels eines Bolzens (9 b) und vorgespannt mittels einer Schenkelfeder (9 c) im verklinkenden Sinne, am Triebelement (12, 18, 19) angelenkt ist.

4. Vorrichtung nach einem der Ansprüche 1 bis 3, **dadurch gekennzeichnet, daß** an der Reversierklinke (9), vorgespannt durch eine Schenkelfeder (15 a), eine Abstützklinke (15) für einen Wirkeingriff mit dem Rückzugelement (10) zur Verhinderung einer unerwünschten Verklinkung der Reversierklinke (9) mit dem Rückzugelement vorgesehen ist.

5. Vorrichtung nach einem der Ansprüche 2 bis 4, **dadurch gekennzeichnet, daß** die Reversierklinke (9) einen unteren Hebelarm für ein selbsttätiges Entklinken nach erfolgter Reversierung besitzt.

6. Vorrichtung nach einem der Ansprüche 1 bis 5, **dadurch gekennzeichnet, daß** das Triebelement als Reversierkolben (12) einer hydraulisch arbeitenden, manuell betätigbaren Reversiereinrichtung ausgebildet ist.

7. Vorrichtung nach Anspruch 6, **dadurch gekennzeichnet, daß** ein teleskopartig ausziehbarer Arbeitskolben (11) vorgesehen ist, der mit seinem unteren Ende unter Bildung eines hydraulisch wirksamen Ringspaltes (12 b) in eine becherförmige Ausnehmung (12 a) im Reversierkolben (12) hineinragt, wobei im Grundzustand der Reversiereinrichtung der Raum (16) oberhalb des Reversierkolbens (12) mit Hydrauliköl gefüllt ist und dem Reversierkolben (12) mindestens eine Kolben-Aufstellfeder (14) zugeordnet ist.

8. Vorrichtung nach Anspruch 7, **dadurch gekennzeichnet, daß** der Arbeitskolben (11) ein vorzugsweise gepolstertes Betätigungskopfteil (11 a) für eine direkte oder indirekt über die Fronthaube manuelle Rückstellung des ausgefahrenen Arbeitskolbens besitzt.

9. Vorrichtung nach einem der Ansprüche 1 bis 5, **dadurch gekennzeichnet, daß** das Triebelement als Gleitstück (18), an welchem das Zugseil (17 a) eines Bowdenzuges befestigt ist, ausgebildet ist.

10. Vorrichtung nach einem der Ansprüche 1 bis 5, **dadurch gekennzeichnet, daß** das Triebelement als Reversiermutter (19) eines elektromotorischen Spindelantriebes (20, 21, 22) ausgebildet ist.

## Claims

1. Apparatus for protecting individuals in the case of a frontal impact on a motor vehicle by means of active raising of the bonnet (400) of the motor vehicle, at least in the front lock region of the bonnet, the device comprising a raising element (600) with a housing (1) fixed on the bodywork and with a lifting element (2) which is guided linearly therein, is connected to the bonnet lock and, under sensor control, can be extended by means of a spring accumulator (3) by a predetermined lift, when raising the bonnet, and which has a device for reversing the raised lifting element, **characterized in that** the reversing device has a reversing pawl (9), the reversing pawl being coupled rotatably to a driving element (12, 18, 19), which can be driven manually or by electric motor, the reversing pawl being accommodated in the housing (1) together with the driving element in a manner such that it is guided linearly parallel to the lifting element (2), and the reversing pawl having control contours for an automatic latching and unlatching to/from a pull-back element (10) on the lifting element (2) as a function of the position to which the lifting element is raised.

2. Apparatus according to Claim 1, **characterized in that** the reversing pawl (9) has a pawl lug (9a) for a latching operative engagement for the pull-back element, which is designed as a pull-back hook (10), on the lifting element (2).

3. Apparatus according to Claim 1 or 2, **characterized in that** the reversing pawl (9) is coupled to the driving element (12, 18, 19) by means of a bolt (9b) and prestressed in the latching direction by means of a leg spring (9c).

4. Apparatus according to one of Claims 1 to 3, **characterized in that** a support pawl (15), prestressed by a leg spring (15a), is provided on the reversing pawl (9) for an operative engagement with the pull-back element (10) to prevent an undesired latching of the reversing pawl (9) with the pull-back element.

5. Apparatus according to one of Claims 2 to 4, **characterized in that** the reversing pawl (9) has a lower lever arm for automatic unlatching after reversing has taken place.

6. Apparatus according to one of Claims 1 to 5, **characterized in that** the driving element is designed as a reversing piston (12) of a hydraulically operating, manually actuable reversing device.

7. Apparatus according to Claim 6, **characterized in that** a working piston (11) is provided which can be extended telescopically and protrudes with its lower end into a cup-shaped recess (12a) in the reversing piston (12) forming a hydraulically effective annular gap (12b), the space (16) above the reversing piston (12) being filled in the basic state of the reversing device by hydraulic oil, and at least one piston-raising spring (14) being assigned to the reversing piston (12).

8. Apparatus according to Claim 7, **characterized in that** the working piston (11) has a preferably padded actuating head part (11a) for a manual resetting of the extended working piston directly or indirectly via the bonnet.

9. Apparatus according to one of Claims 1 to 5, **characterized in that** the driving element is designed as a sliding element (18) to which the pull cable (17a) of a Bowden cable is fastened.

10. Apparatus according to one of Claims 1 to 5, **characterized in that** the driving element is designed as a reversing nut (19) of an electric motor spindle drive (20, 21, 22).

## Revendications

1. Dispositif pour la protection des personnes lors d'une collision frontale avec un véhicule automobile par soulèvement actif du capot avant (400) de ce dernier au moins dans la région avant de serrure de capot, constitué d'un élément de soulèvement (600) avec un boîtier (1) solidaire de la carrosserie et un élément de levage (2), guidé linéairement dans ce dernier et relié à la serrure de capot, qui, sous la commande d'un capteur, peut être déployé au moyen d'un accumulateur à ressort (3) d'une course prédéfinie en soulevant le capot avant, et qui présente un équipement pour renverser l'élément de levage soulevé, **caractérisé en ce que** l'équipement de renversement présente un cliquet de renversement (9), articulé à rotation à un élément d'entraînement (12, 18, 19) pouvant être entraîné manuellement ou par moteur électrique, qui est reçu conjointement avec l'élément d'entraînement dans le boîtier (1) en étant guidé linéairement parallèlement à l'élément de levage (2) et qui possède des contours de commande pour un encliquetage et désencliquetage automatique, en fonction de la position de soulèvement de l'élément de levage, avec un élément de rappel (10) sur l'élément de levage (2).

2. Dispositif selon la revendication 1, **caractérisé en ce que** le cliquet de renversement (9) possède un ergot de cliquet (9a) pour un engagement actif d'encliquetage pour l'élément de rappel réalisé sous forme de crochet de rappel (10) sur l'élément de levage (2).

3. Dispositif selon la revendication 1 ou 2, **caractérisé en ce que** le cliquet de renversement (9) est articulé à l'élément d'entraînement (12, 18, 19) au moyen d'un tourillon (9b) et en étant précontraint dans le sens d'encliquetage au moyen d'un ressort à branches (9c).

4. Dispositif selon l'une quelconque des revendications 1 à 3, **caractérisé en ce qu'**un cliquet de soutien (15) est prévu sur le cliquet de renversement (9) en étant précontraint par un ressort à branches (15a), pour un engagement actif avec l'élément de rappel (10) afin d'empêcher un encliquetage indésirable du cliquet de renversement (9) avec l'élément de rappel.

5. Dispositif selon l'une quelconque des revendications 2 à 4, **caractérisé en ce que** le cliquet de renversement (9) possède un bras de levier inférieur pour un désencliquetage automatique une fois le renversement effectué.

6. Dispositif selon l'une quelconque des revendications 1 à 5, **caractérisé en ce que** l'élément d'entraînement est réalisé sous forme de piston de renversement (12) d'un équipement de renversement à fonctionnement hydraulique pouvant être actionné manuellement.

7. Dispositif selon la revendication 6, **caractérisé en ce qu'**il est prévu un piston de travail (11) pouvant être déployé télescopiquement qui, par son extrémité inférieure, pénètre dans un évidement (12a) en forme de cuvette dans le piston de renversement (12) en formant une fente annulaire (12b) hydrauliquement active, sachant que, dans la position de base de l'équipement de renversement, l'espace (16) au-dessus du piston de renversement (12) est rempli de liquide hydraulique, et sachant qu'au moins un ressort (14) de soulèvement de piston est associé au piston de renversement (12).

8. Dispositif selon la revendication 7, **caractérisé en ce que** le piston de travail (11) possède une partie (11a) de tête d'actionnement de préférence rembourrée pour un rappel manuel, direct ou indirectement par l'intermédiaire du capot avant, du piston de travail déployé.

9. Dispositif selon l'une quelconque des revendications 1 à 5, **caractérisé en ce que** l'élément d'entraînement est réalisé sous forme de coulisseau (18) auquel est fixé le câble de traction (17a) d'un câble Bowden.

10. Dispositif selon l'une quelconque des revendications 1 à 5, **caractérisé en ce que** l'élément d'entraînement est réalisé sous forme d'écrou de renversement (19) d'un entraînement à broche à moteur électrique (20, 21, 22).
